Europäisches Patentamt

(19) European Patent Office

Office européen des brevets

(11) Publication number: **0 268 036**
**B1**

## (12) EUROPEAN PATENT SPECIFICATION

(45) Date of publication of the patent specification:
**25.07.90**

(51) Int. Cl.⁵: **F16F 9/04, B21D 37/12**

(21) Application number: **87113392.2**

(22) Date of filing: **14.09.87**

(54) Die spring construction.

(30) Priority: **10.11.86 US 929124**

(43) Date of publication of application:
**25.05.88 Bulletin 88/21**

(45) Publication of the grant of the patent:
**25.07.90 Bulletin 90/30**

(84) Designated Contracting States:
**DE ES FR GB IT**

(56) References cited:
**DE-A- 2 403 806**
**FR-A- 1 243 699**

(73) Proprietor: **THE FIRESTONE TIRE & RUBBER COMPANY, 1200 Firestone Parkway, Akron, Ohio 44317(US)**

(72) Inventor: **Ecktman, Jack D., 7685 Little Johne Drive Apt. 10, Indianapolis Indiana 46219(US)**

(74) Representative: **von Raffay, Vincenz, Dipl.-Ing. et al, Patentanwälte Raffay, Fleck & Partner Postfach 32 32 17, D-2000 Hamburg 13(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a pneumatic shock absorbing device according to the preamble of claim 1.

Such a device has been known from the teachings of the DE-A 2 403 806.

Large metal working presses are used in many stamping operations and usually consist of a ram which is brought into contact with a metal part placed in a die mounted on an upper or lower platen for forming the metal into the desired shape.

In certain presses the die is mounted on the moving ram. These presses impart thousands of pounds of pressure during the forming stroke to form the metal member into the desired configuration. Most of this pressure or force is absorbed by the metal. However there is always a certain amount of excess force or energy that is transferred and absorbed by the supporting die, the press platen and other components of the press. Unless the die platen, etc. are supported on resilient mounts or springs, this excess energy applied to the press quickly results in cracks and breakage of the press and various components thereof. Therefore to reduce this fatique problem the die and/or platen as well as the hydraulic or pneumatic ram is supported on some type of shock absorbing device such as springs.

One common type of spring used in many processes is a nitrogen die spring in which a piston is slidably mounted in a cylinder containing high pressure nitrogen. The press forces or excess energy is applied to the piston rod which compresses the nitrogen within the cylinder to absorb the forces preventing their transfer directly to the press components. These nitrogen die springs possess the serious problem of requiring a sliding seal between the piston and cylinder walls. Such seals are difficult to maintain in a gas tight condition due to the high pressures of the nitrogen and constant sliding movement of the seals along the wall of the cylinder.

Nitrogen is the desired gas for such springs since it provides a more linearly compression rate than most gasses, including air, and it enables the desired results applicable at various pressures, to be easily calculated and achieved, and is not subject to breakdown or wide changes in temperatures as are other gasses. However, this requires the additional expense of supplying and maintaining the nitrogen for the springs.

This sliding seal problem has been attempted to be eliminated by the use of self-contained die cushions which use an elastomeric bladder filled with nitrogen or other compressible gas. Although these die cushions eliminate the sliding seal problem, they require a considerable large size bladder to achieve the desired pressure which requires larger components to be built into the press or other piece of equipment for receiving the die cushion. Thus even though the sliding seal problem has been eliminated by these die cushions, they possess other undesirable characteristics, namely size vs. pressure ratio.

The other known prior art related to the present invention is disclosed in the following patents.

U.S. Patent No. 894 117 discloses a pneumatic suspension device using a flexible sleeve attached by a screw tightened clamping plate within the interior of an inner member with the other end of the sleeve clamped by a screw tightened plate to the inside of an outer member telescopically, movably mounted with respect to the inner member. The spring of this patent requires a considerable number of components, such as stop washers, screw actuated sealing clamps, spring biased lubricating pads, expensive machined and/or cast metal parts, and requires the rolled portion of the sleeve to extend about a lower edge of a movable inner sleeve which would result in rapid wear and a short life span to the flexible sleeve.

Swiss Patent No. 216 813 discloses a telescopic shock absorbing assembly in which a piston has a flexible bellows attached to it by an annular crimping member. The other end of the flexible member is attached at an annular ring at the bottom of the stationary lower housing. A movable upper housing telescopes outwardly about the outer housing and a flexible member rolls between the interior surface of the housing and the exterior surface of the piston.

Russian Patent No. 423 927 discloses a flexible bellows which has an outer member which telescopes upwardly around an inner stationary member when the fluid pressure between the bellows and inner member is pressurized and expands the bellows upwardly. One end of the bellows member is attached to a portion of a telescoping member by an annular crimping ring.

German Patent No. 2 751 430 discloses another type of device in which a flexible bellows is attached at one end between a relatively stationary upper and lower housing and at its upper end to an annular piston plate.

DE-A 2 403 806 is disadvantageous as regards the securement of the inner and outer housing which may lead to failure under high internal pressures. Moreover in off-center loading the sleeve may be damaged when used in a stamping press.

None of these prior art devices are able to achieve the results of the present invention set forth below by a spring construction similar to that disclosed herein. Therefore the need exists for an improved die spring construction which is able to withstand high repeated loads exerted thereon without the use of internal sliding seals and which will enable air to be used as the compressable fluid if desired, and which can be accomplished with a considerable fewer components than required in known prior art devices.

## DISCLOSURE OF THE INVENTION

The objective of the invention is to provide a die spring construction which has increased flexibility with regards to off-center loading, which provides a safer device and in which the die spring components are formed of relatively inexpensive sheet metal members easily assembled to form the final spring construction.

This objective is obtained by the pneumatic shock absorbing device according to claim 1.

## BRIEF DESCRIPTION OF THE DRAiWINGS

A preferred embodiment of the invention, illustrative of the best mode in which applicant has contemplated applying the principles, is set forth in the following description and is shown in the drawings and is particularly and distinctly pointed out and set forth in the appended claims.

Fig. 1 is a diagrammatic sectional view showing a die press having three of the improved die springs mounted therein;

Fig. 2 is an exploded perspective view showing the various components of the improved die spring in disassembled condition;

Fig. 3 is an enlarged vertical sectional view of the die spring in assembled position shown in the extended or normal at-rest position;

Fig. 4 is a sectional view similar to Fig. 3 showing the die spring in a compressed position;

Fig. 5 is an enlarged fragmentary sectional view showing the end cap and sealing band sealingly connected to the upper end of the flexible sleeve; and

Fig. 6 is an enlarged fragmentary sectional view showing the rolled edges of the inner and outer housings engaged with each other when the die spring is in the extended position.

Similar numerals refer to similar parts throughout the drawings.

## BEST MODE FOR CARRYING OUT THE INVENTION

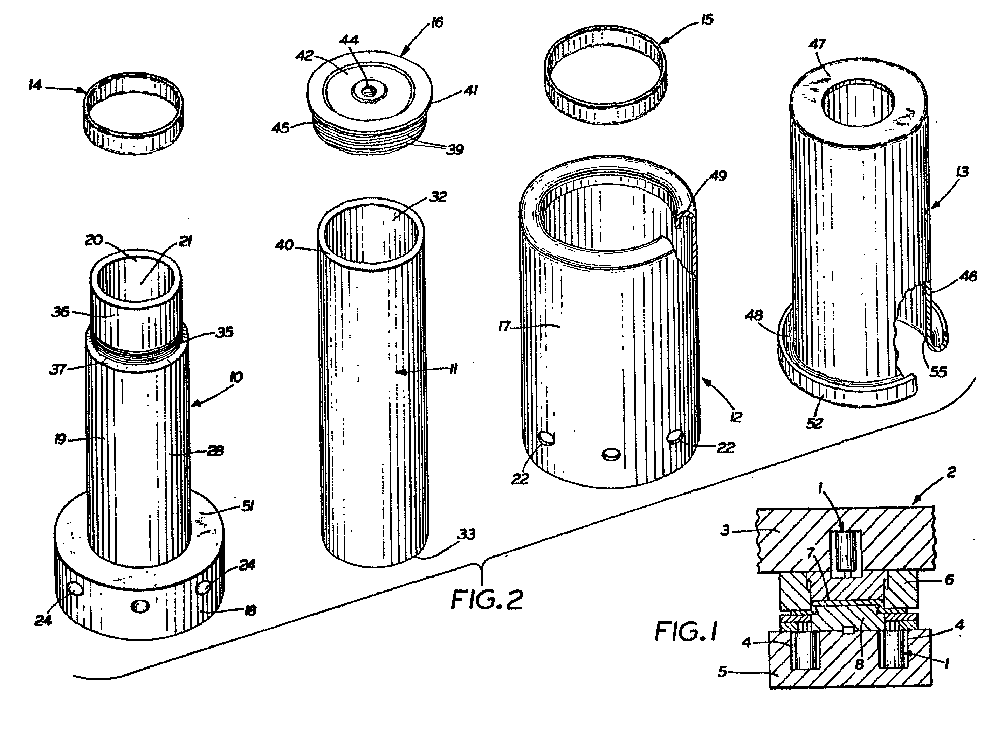

The improved die spring construction is indicated generally at 1, and three of them are shown diagrammatically in FIG. 1 mounted in a die press indicated generally at 2. One of the die springs is shown mounted in the upper plate 3 of the press with two of the springs being located in cavities 4 in a lower plate 5 of the press. The upper die 6 is shown in mating engagement with a metal component 7 which is being conformed to a bottom die 8. FIG. 1 is illustrative of one type of installation in which the improved spring of the invention may be utilized but need not be limited to such an application.

The main components of improved die spring 1 are shown disassembled in FIG. 2 and consist of a piston member indicated generally at 10; a cylindrical shaped flexible sleeve formed of a elastomeric fabric reinforced material, indicated generally at 11; an outer cylindrical-shaped metal housing indicated generally at 12; an inner cylindrical-shaped metal housing indicated generally at 13; a lower and upper crimping band 14 and 15; and a sleeve sealing disc indicated generally at 16.

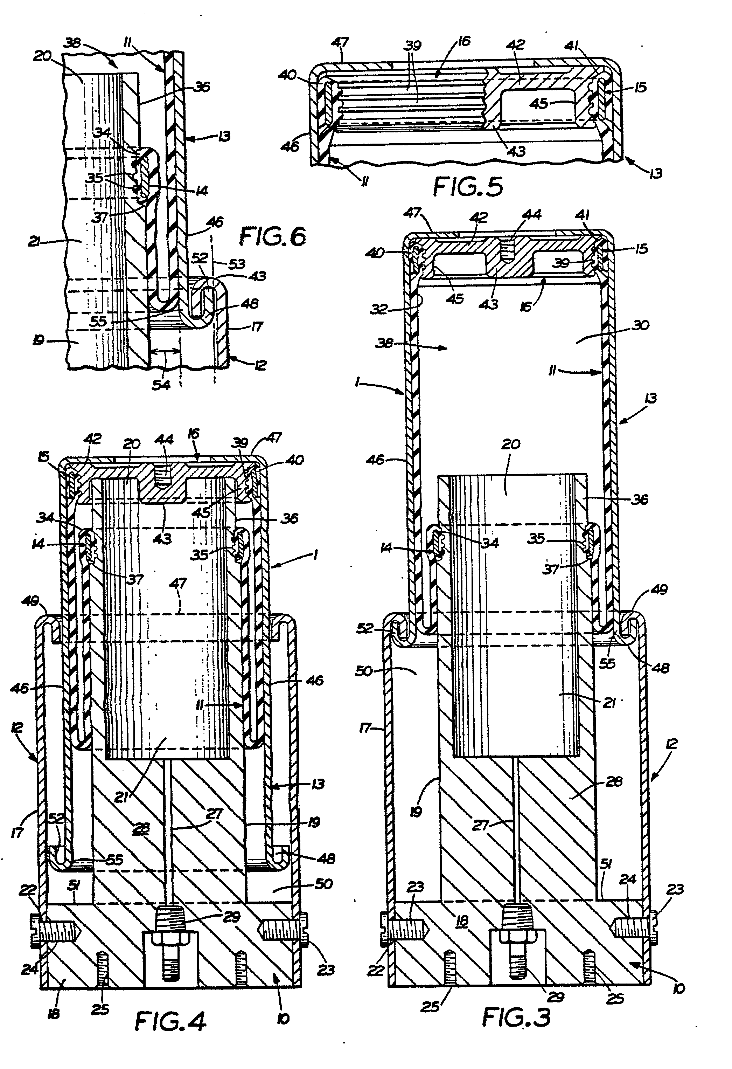

Referring to FIGS. 2 and 3, piston member 10 includes an annular base 18 preferably formed integrally with an upstanding piston 19 having an upper open end 20 which provides access into a hollow interior 21 which forms part of a fluid reservoir indicated generally at 38. Housing 12 has a cylindrical side wall 17 and when in assembled condition is telescopically mounted about piston 19 and is secured to annular base 18 by a plurality of attachment bolts 23 or other securing means which extend through holes 22 formed in housing wall 12 and into threaded holes 24 formed in the base. A plurality of additional threaded holes 25 may be formed in the bottom of base 18 for mounting the die spring on a piece of equipment with which it is to be used, such as within cavity 4 of the die press as shown in FIG. 1. An inlet port 27 is formed in a solid cylindrical base portion 28 of piston 19 and is adapted to be connected to a source of high pressure gas by means of a connector 29 for supplying the gas into hollow interior 21 and into the high pressure fluid chamber 30 formed by flexible sleeve 11 which collectively form fluid reservoir 38.

Flexible sleeve 11 preferably is formed of a fiber or fabric reinforced elastomeric material and has a cylindrical-shape formed with an open upper end 32 and an open bottom end 33. The lower end of sleeve 11 is telescopically mounted on the exterior surface of piston 19 and sealingly clamped thereon by crimping band 14. An inturned end 34 of sleeve 11 is pressed by crimping band 14 into a plurality of annular grooves 35 formed in a reduced diameter upper portion 36 of piston 19 adjacent an annular shoulder 37. Grooves 35 and shoulder 37 assist in retaining inturned end portion 34 of sleeve 11 in a fluid tight sealing engagement with piston portion 36 when pressed thereagainst by band 14.

Open end 32 of flexible sleeve 11 is sealed by sealing disc 16 as shown particularly in FIGS. 3 and 5. Sealing disc 16 has an annular shape with a cylindrical side wall 45 formed with a series of grooves 39 against which upper end portion 40 of sleeve 11 is clamped by annular crimping band 15 in a similar manner as is the lower end portion 34 of sleeve 11 by band 14. An annular shoulder 41 is formed above grooves 39 to assist in locking sleeve end 40 in its crimped position. End wall 42 of sealing disc 16 may be formed with a central boss 43 having a threaded hole 44 formed therein for attaching the end cap and correspondingly the upper end of die spring 1, in an installed position when mounted in a die or other piece of equipment.

Inner housing 13 preferably is formed of stamped sheet metal and has a cylindrical side wall 46 terminating in an annular top wall 47. In accordance with one of the features of the invention the lower end of inner housing 13 is formed with an annular rolled U-shaped edge 48 which engages a similar shaped top rolled edge 49 formed on outer housing 12 (FIG. 6). The diameter of cylindrical side wall 45 of end cap 16 is generally complementary to the inside diameter of cylindrical wall 46 of inner housing 13 as shown in FIG. 5 being so configured that crimping band 15 is located therein together with the rolled end portion 40 of sleeve 11. This relationship assits in maintaining the sealing engagement of the sleeve end with grooves 39 since the extreme high pressure of the fluid within fluid reservoir 38 in attempting to escape will force sleeve end 40 and band 15 outwardly against wall 46 but is prevented by rigid wall 46 from movement. Thus, rolled end 40 of sleeve 11 in addition to being rigidly clamped against sealing disc 16 by band 15, is further retained by the relationship of the inner surface of inner housing wall 46 and band 15.

Improved die spring 1 is constructed in a relatively simple manner preferably by first crimping sleeve 11 to piston 19 by sealing band 14 and then to sealing disc 16 by band 15. Next the sleeve will be collapsed around the piston in a manner shown in FIG. 4. Outer housing 12 then is slipped over inner housing 13 and then the combined housings are slipped down over the collapsed sleeve and then secured to piston base 18 by bolts 23.

The operation of improved die spring 1 is best illustrated in FIGS. 1, 3 and 4. Fluid reservoir 38 will contain a supply of compressed air which is injected therein through inlet port 27. Although air is preferred as the compression fluid, other types of gasses such as nitrogen can be used without effecting the concept of the invention. Therefore the invention need not be limited to the use of air although the same is preferred due to its availability and reduced cost with respect to other types of fluids.

When in the pressurized position of FIG. 3, referred to as the normal, at-rest or extended position, the pressure acting upon sealing disc 16 will move disc 16 axially within inner housing 13 into abutting engagement with top wall 47 thereof moving housing 13 to the extended position of FIG. 3. Housing 13 is maintained in this extended position by the internal fluid pressure and by the engagement of rolled edges 48 and 49 which serves as stops to limit the movement of inner housing 13 upon reaching its extended position.

The operation, features and advantages of the improved die spring is best illustrated in FIGS. 3 and 4. Upon a generally axial force being applied either to end wall 47 of inner housing 13 or to the base of piston member 10, inner housing 13 will move into annular space 50 formed between cylindrical wall 17 of outer housing 12 and piston 19, with sleeve 11 moving downwardly along the outer surface of piston 19 as shown in FIG. 4. The fluid contained within the fluid reservoir 38 is compressed absorbing the energy applied to spring 1. The internal pressure of the compressed fluid then will automatically return inner housing 13 to the extended position of FIG. 3 upon removal of the axial force exerted thereon.

In certain applications, auxiliary equipment such as a surge tank regulator or the like will be attached to connector 29 through appropriate conduits which would insure that a constant pressure is maintained within fluid chamber 38 instead of permitting an unlimited compression of the fluid contained therein. For either application, die spring 1 performs its intended function. Also, rolled edge 48 of inner housing 13 will contact annular shoulder 51 of base 18 to provide a positive mechanical stop to prevent damage to sleeve 11 and the sealing connections thereof should the force applied to the die spring be large enough to cause the die to bottom out in an unusual situation since the die is designed that the fluid will absorb the applied force preventing such contact.

The particular relationship between outer and inner housings 12 and 13, respectively, provides a stable die spring able to withstand some degree of nonaxially applied forces and provides an extremely safe and efficient device. The outer diameter of annular rolled edge 48 of inner housing 13 indicated by imaginary line 53 (FIG. 6), is almost equal to the inside diameter of cylindrical wall 17 of outer housing 12. This relationship prevents excess lateral movement of inner housing 13 with respect to outer housing 12 and transmits any off center forces applied thereto in a generally axial direction.

Also the inside diameter of inner housing 13, that is of cylindrical side wall 46 is sufficiently large to provide a sufficient distance from the side wall of piston 19 to permit sleeve 11 to extend and fold thereabout as shown in FIG. 4. This distance represented by arrow 54 in FIG. 6 being greater than the spacing between the outer end of rolled end 48 and inside surface of outer housing wall 17, insures that any off centered forces applied to the housings will cause upwardly extending flange 52 of rolled edge 48 to engage the inner surface of side wall 17 before the opposite portion 55 of rolled end 48 crushs or pinches sleeve 11 against the outer surface of piston 19. Likewise, the complete circumferential engagement of rolled ends 48 and 49 as shown in FIGS. 3 and 6, will enable high pressures to be used and contained within fluid chamber 38 without any danger of separating the two telescopically joined housings.

Furthermore, the sliding engagement between the two houses does not require any sealing means since the high pressure fluid is contained within fluid chamber 38 by sleeve 11 and is not exerted at the sliding area between the two movable members of the die as in prior die spring constructions using a piston and surrounding sealing ring engageable with the inner walls of a cylinder. Another feature of the invention is that the location of sealing bands 14 and 15 with respect to the ends of sleeve 11, is aided by the high internal pressure to assist the sealing action thereof instead of tending to break the seal between the sealed members. As discussed above, the high internal pressure attempts to force sealing band 15 outwardly but such movement is prevented by the inner surface of inner housing wall 46. Also the pressure pushes the lower sealing band 14 against annular grooves 35 and shoulder 37 of piston member 10.

Accordingly the improved die spring provides a device with fewer and lower cost components than with most known die constructions thereby providing a less expensive, but highly efficient device which completely eliminates the need for a sliding seal, which heretofore has been the main problem area with existing high pressure nitrogen or other pneumatic seals; which provides a longer life to the die spring due to the elimination of such sliding seals; which enables air to be used as the fluid medium without the sacrifice of operating characteristics thereof; which reduces air leakage at the sealing locations of the flexible sleeve to the piston member and upper sealing disc; and which provides more flexibility with regards to off center loading than known prior die spring constructions.

Outer housing 12 serves as a guide for inner housing 13 and could have other configurations than the cylindrical shaped shown in the drawings since it does not absorb or restrain any of the fluid pressure. Inner housing 13 likewise could have other shapes but cylindrical is preferred since this enables wall 46 to equally restrain the radial outward pressure exerted by the fluid thereon. Likewise, upper end 32 of sleeve 11 can be sealed by other means than disc 16 and band 15 provided that the external fluid is prevented from escaping therefrom.

Accordingly, the improved die spring construction is simplified, provides an effective, safe, inexpensive, and efficient device which achieves all the enumerated objectives, provides for eliminating difficulties encountered with prior devices, and solves problems and obtains new results in the art.

## Claims

1. A pneumatic shock absorbing device for the die of a stamping press including:
   (a) a piston member (10, 19) having a base (18) and an upstanding cylindrical body (19) formed with an interior gas reservoir (21),
   (b) an outer housing (12) mounted on the base (18) of the piston member (10) and extending about at least a part of the body of said piston member (10, 19),
   (c) an inner housing (13) flexibly mounted with regards to off center loading, telescopically mounted for slideable movement within the outer housing (12) and movable from a normal extended position toward a retracted position upon an axial force being applied to the inner housing (13),
   (d) a flexible elastomeric sleeve (11) having a pair of open ends (32, 33) sealingly connected at one open end (33) to the exterior of an outer end of the piston member body (19) and enclosed at the other end (32) by an end cap (16),
   (e) opening means (27) formed in the piston member (10, 19) for admitting pressurized gas into the reservoir (21, 38),
   (f) stop means formed on the upper open end of the outer housing (12) and the lower open end of the inner housing (13) mutually engageable for stopping the sliding movement of the inner housing (13) upon reaching the extended position, characterized in that the upper open end of the outer housing (12) and the lower open end of the inner housing (13) terminate in rolled edges (48, 49); and in which the rolled edges (48, 49) of said housings (12, 13) engage each other when the inner housing (13) is in the maximum extended position, whereby the distance (54) from the side wall of the piston member (10, 19) to the inside wall (46) of the inner housing (13) being greater than the spacing between the outer end of rolled edge (48) and the inside surface of the outer housing wall (17) in order to insure that any off centered forces applied to the housings will cause upwardly extending flange (52) of rolled edge (48) to engage the inner surface of the sidewall (17) before the opposite portion (55) of the rolled end (48) crushs or pinches sleeve (11) against the outer surface of the piston (19).

2. The die spring construction defined in Claim 1 in which the end cap (16) engages an end wall of the inner housing (13) upon axial expansion of the sleeve (11) by the pressurized fluid to move said inner housing (13) toward the expanded position.

3. The die spring construction defined in Claim 1 in which the body of the piston member (10, 19) has an annular base (18); and in which the outer housing (12) is attached to the annular base (18) by fasteners.

4. The die spring construction defined in Claim 1 in which the open ends of the sleeve (11) are sealingly clamped by annular bands to the piston member (10, 19) and end cap.

5. The shock absorbing device defined in Claim 1 in which the inner housing (13) has an end wall and is abuttingly engaged by the end cap (16) to place said inner housing (13) in the normal expanded position.

6. The shock absorbing device defined in Claim 1 in which the inner diameter of the outer housing (12) is slightly greater than the outer diameter of the rolled edge (48) of the inner housing (13) sufficient to permit only general axial movement therebetween.

7. The spring defined in Claim 1 in which the upper and lower housings (12, 13) are cylindrically shaped; in which an upper end of the lower housing terminates in an inwardly rolled U-shaped edge which engages a similar outwardly rolled U-shaped edge formed on a lower end of the upper housing: and in which said rolled edges (48, 49) engage each other to stop the upward axial movement of the upper housing upon reaching the extended position.

8. The spring defined in Claim 1 in which the outer diameter of the end cap (16) and sealing band is complementary to the inside diameter of the inner housing (13) whereby the inner housing (13) restrains outward movement of said sealing band (14).

9. The spring defined in Claim 8 in which the end cap (16) has a cylindrical side wall (45) formed with a series of annular grooves (35) for connecting the flexible sleeve (11) to the end cap (16) by an annular sealing band (14, 15).

## Revendications

1. Dispositif pneumatique d'absorption de chocs pour la matrice d'une presse à emboutir, comprenant:
   (a) un élément à piston (10, 19) ayant une base (18) et un corps cylindrique montant (19) formé de façon à présenter un réservoir intérieur (21) de gaz,
   (b) une enveloppe extérieure (12) montée sur la base (18) de l'élément à piston (10) et s'étendant autour d'au moins une partie du corps dudit élément à piston (10, 19),
   (c) une enveloppe intérieure (13) montée de façon flexible pour un chargement décentré, monté télescopiquement pour effectuer un mouvement coulissant à l'intérieur de l'enveloppe extérieure (12) et pouvant se déplacer d'une position normale d'extension vers une position de retrait sous l'effet de l'application d'une force axiale à l'enveloppe intérieure (13),
   (d) un manchon élastomérique flexible (11) présentant deux extrémités ouvertes (32, 33), une première extrémité ouverte (33) étant reliée de façon étanche à l'extérieur d'une extrémité extérieure du corps (19) de l'élément à piston et l'autre extrémité (32) étant fermée par un chapeau d'extrémité (16),

(e) un moyen à ouverture (27) formé dans l'élément à piston (10, 19) pour l'admission d'un gaz comprimé dans le réservoir (21, 38),

(f) des moyens d'arrêt formés sur l'extrémité supérieure ouverte de l'enveloppe extérieure (12) et sur l'extrémité inférieure ouverte de l'enveloppe intérieure (13), pouvant s'enclencher mutuellement l'un contre l'autre pour arrêter le mouvement de coulissement de l'enveloppe intérieure (13) lorsqu'elle atteint la position d'extension, caractérisé en ce que l'extrémité supérieure ouverte de l'enveloppe extérieure (12) et l'extrémité inférieure ouverte de l'enveloppe intérieure (13) se terminent par des bords roulés (48, 49); et dans lequel les bords roulés (48, 49) desdites enveloppes (12, 13) s'enclenchent l'un avec l'autre lorsque l'enveloppe intérieure (13) est dans la position d'extension maximale, de manière que la distance (54) de la paroi latérale de l'élément à piston (10, 19) à la paroi intérieure (46) de l'enveloppe intérieure (13) soit supérieure à l'écartement entre l'extrémité extérieure du bord roulé (48) et la surface intérieure de la paroi (17) de l'enveloppe extérieure pour assurer que toutes forces décentrées appliquées aux enveloppes amènent un rebord (52), s'étendant vers le haut, du bord roulé (48) à porter contre la surface intérieure de la paroi latérale (17) avant que la partie opposée (55) de l'extrémité roulée (48) écrase ou pince le manchon (11) contre la surface extérieure du piston (19).

2. Construction de ressort de matrice selon la revendication 1, dans laquelle le chapeau d'extrémité (16) porte contre une paroi extrême de l'enveloppe intérieure (13) à la suite d'une expansion axiale du manchon (11) par le fluide comprimé pour déplacer ladite enveloppe intérieure (13) vers la position d'expansion.

3. Construction de ressort de matrice selon la revendication 1, dans laquelle le corps de l'élément à piston (10, 19) comporte une base annulaire (18), et dans laquelle l'enveloppe extérieure (12) est reliée à la base annulaire (18) par des organes de fixation.

4. Construction de ressort de matrice selon la revendication 1, dans laquelle les extrémités ouvertes du manchon (11) sont bridées de façon étanche par des bandes annulaires sur l'élément à piston (10, 19) et le chapeau d'extrémité.

5. Dispositif d'absorption de chocs selon la revendication 1, dans lequel l'enveloppe intérieure (13) comporte une paroi extrême et le chapeau d'extrémité (16) vient buter contre elle afin de placer ladite enveloppe intérieure (13) dans la position d'expansion normale.

6. Dispositif d'absorption de chocs selon la revendication 1, dans lequel le diamètre intérieur de l'enveloppe extérieure (12) est légèrement plus grand que le diamètre extérieur du bord roulé (48) de l'enveloppe intérieure (13) et suffisant pour ne permettre qu'un mouvement axial global entre elles.

7. Ressort selon la revendication 1, dans lequel les enveloppes supérieure et inférieure (12, 13) sont de forme cylindrique; dans lequel une extrémité supérieure de l'enveloppe inférieure se termine par un bord de forme en U, roulé vers l'intérieur, qui s'enclenche avec un bord similaire, de forme en U, roulé vers l'extérieur, formé sur une extrémité inférieure de l'enveloppe supérieure; et dans lequel lesdits bords roulés (48, 49) s'enclenchent l'un avec l'autre pour arrêter le mouvement axial de montée de l'enveloppe supérieure lorsqu'elle atteint la position d'extension.

8. Ressort selon la revendication 1, dans lequel le diamètre extérieur du chapeau d'extrémité (16) et de la bande de fermeture étanche est complémentaire du diamètre intérieur de l'enveloppe intérieure (13) afin que l'enveloppe intérieure (13) s'oppose à un mouvement de ladite bande de fermeture étanche (14) vers l'extérieur.

9. Ressort selon la revendication 8, dans lequel le chapeau d'extrémité (16) comporte une paroi latérale cylindrique (45) formée de façon à présenter une série de gorges annulaires (35) pour relier le manchon flexible (11) au chapeau d'extrémité (16) par une bande annulaire (14, 15) de fermeture étanche.

**Patentansprüche**

1. Pneumatische Schockabsorbierungsvorrichtung für den Stempel einer Stanzpresse, umfassend:

(a) ein Kolbenglied (10, 19) mit einer Basis (18) und einem aufrechten zylindrischen Körper (19), der mit einem inneren Gasreservoir (2) versehen ist,

(b) ein äußeres Gehäuse (12), das auf der Basis (18) des Kolbengliedes (10) befestigt ist und sich zumindestens um einen Teil des Körpers des Kolbengliedes (10, 19) erstreckt,

(c) ein inneres Gehäuse (13), das flexibel im Hinblick auf außermittige Belastung teleskopisch zur verschiebbaren Bewegung innerhalb des Gehäuses (12) befestigt ist und aus einer senkrecht ausgezogenen Stellung bis hin zu einer zusammengezogenen Stellung aufgrund einer Axialkraft, die auf das innere Gehäuse (13) ausgeübt wird, bewegbar ist,

(d) eine flexible elastomere Hülse (11) mit einem Paar offener Enden (32, 33), die abdichtend mit ihrem einen offenen Ende (33) am äußeren eines äußeren Endes des Körpers des Kolbengliedes (19) angeschlossen und mit ihrem anderen Ende (32) durch eine Endkappe (16) umschlossen ist,

(e) ein Öffnungsmittel (27), das im Kolbenglied (10, 19) ausgebildet ist, um unter Druck stehendes Gas in das Reservoir (21, 38) einzulassen,

(f) Anschlagmittel, die am oberen offenen Ende des äußeren Gehäuses (12) und am unteren offenen Ende des inneren Gehäuses (13) ausgebildet sind, und wechselseitig miteinander in Eingriff stehen, um die Verschiebungsbewegung des inneren Gehäuses (13), nachdem es die ausgezogene Stellung erreicht, anzuhalten, dadurch gekennzeichnet, daß das obere offene Ende des äußeren Gehäuses (12) und das untere offene Ende des inneren Gehäuses (13) in umgewalzten Kanten (48, 49) enden, und daß die umgewalzten Kanten (48, 49) der Gehäuse (12, 13) miteinander in Eingriff stehen, wenn das innere Gehäuse (13) in seiner maximal ausgezogenen Stellung ist, wobei die Entfernung (54) von der Seitenwand des Kolbengliedes (10, 19) zur Innenwand (46) des inneren Gehäuses (13) größer ist als der Abstand zwischen dem äußeren Ende der umgewalzten Kante (48) und der Innenfläche der äußeren Gehäusewand (17), um sicherzustellen, daß jegliche auf die Gehäuse einwirkenden außermittigen Kräfte bewirken, daß sich der nach oben erstreckende Flansch (52) der umgewalzten Kante (48) mit der Innenfläche der Seitenwand (17) in Eingriff tritt bevor der gegenüberliegende Teil (55) des umgewalzten Endes (48) die Hülse (11) gegen die Außenfläche des Kolbens (19) drückt oder quetscht.

2. Federaufbau für Matrize nach Anspruch 1, bei der die Endkappe (16) mit einer Endwand des inneren Gehäuses (13) nach axialer Expansion der Hülse (11) durch das unter Druck stehende Strömungsmittel in Eingriff tritt, um das innere Gehäuse (13) in Richtung auf die ausgezogene Stellung zu bewegen.

3. Federaufbau für Matrize nach Anspruch 1, bei dem der Körper des Kolbengliedes (10, 19) eine ringförmige Basis (18) besitzt, und bei der das äußere Gehäuse (12) an der ringförmigen Basis (18) durch Befestigungsmittel befestigt ist.

4. Federaufbau für Matrize nach Anspruch 1, bei dem die offenen Enden der Hülse (11) abdichtend durch ringförmige Bänder am Kolbenglied (10, 19) und der Endkappe festgeklammert sind.

5. Schockabsorbierungsvorrichtung nach Anspruch 1, bei der das innere Gehäuse (13) eine Endwand besitzt und anstoßend mit der Endkappe (16) in Eingriff steht, um das innere Gehäuse (13) in seiner senkrechten, expandierten Stellung einzustellen.

6. Schockabsorbierungsvorrichtung nach Anspruch 1, bei der der innere Durchmesser des äußeren Gehäuses (12) etwas größer als der äußere Durchmesser der umgewalzten Kante (48) des inneren Gehäuses (13) ist, ausreichend, um lediglich eine generell axiale Bewegung dazwischen zu gestatten.

7. Federaufbau nach Anspruch 1, bei dem das obere und untere Gehäuse (12 bzw. 13) zylindrisch geformt sind, und bei dem ein oberes Ende des unteren Gehäuses in einer nach innen umgewalzten U-förmigen Kante endet, die mit einer gleichen, nach außen abgewalzten U-förmigen Kante in Eingriff steht, welche auf einem unteren Ende des oberen Gehäuses ausgebildet ist; und bei der die umgewalzten Kanten (48, 49) miteinander in Eingriff stehen, um die nach oben gerichtete Axialbewegung des oberen Gehäuses anzuhalten, nachdem sie ihre ausgestreckte Position erreicht.

8. Federaufbau nach Anspruch 1, bei dem der äußere Durchmesser der Endkappe (16) und des Abdichtungsbandes komplementär zum Innendurchmesser des inneren Gehäuses (13) ist, wodurch das innere Gehäuse (13) eine nach außen gerichtete Bewegung des Abdichtungsbandes (14) einschränkt.

9. Federaufbau nach Anspruch 8, bei dem die Endkappe (16) eine zylindrische Seitenwand (45) besitzt, die mit einer Reihe ringförmiger Nuten (35) ausgebildet ist, um die flexible Hülse (11) mit der Endkappe (16) durch ein ringförmiges Abdichtungsband (14, 15) zu verbinden.

FIG.2

FIG.1

EP 0 268 036 B1

EP 0 268 036 B1

FIG.6

FIG.5

FIG.4

FIG.3